# EUROPÄISCHE PATENTANMELDUNG

(11) **EP 4 273 734 A1**
(43) Veröffentlichungstag der Anmeldung: **08.11.2023**
(21) Anmeldenummer: 23170477.6
(22) Anmeldetag: 27.04.2023
(51) Int. Cl.: G06F 30/20, G05B 19/418

(54) **COMPUTERIMPLEMENTIERTES VERFAHREN, VERFAHREN, COMPUTERPROGRAMMPRODUKT ZUR UMSETZUNG EINER SICHERHEITSMASSNAHME**

(30) Priorität: 02.05.2022 DE 102022110711
(71) Anmelder: Pilz GmbH & Co. KG, 73760 Ostfildern (DE)
(72) Erfinder: Stein, Daniel Frederic, 73760 Ostfildern (DE); Neuschwander, Bernd, 73760 Ostfildern (DE); Stehle, Patrick, 73760 Ostfildern (DE)
(74) Vertreter: Witte, Weller & Partner Patentanwälte mbB

(57) **Zusammenfassung**

Die vorliegende Erfindung betrifft ein computerimplementiertes Verfahren (30) zur Bestimmung mindestens eines Parameters einer Sicherheitskonfiguration eines Sicherheitssystems (12) für eine Maschine (10), mit den folgenden Schritten: Bereitstellen (32) eines virtuellen Modells der Maschine (10) in einer virtuellen Umgebung; Simulieren (34) einer Streuung von einem oder mehreren Partikeln an dem virtuellen Modell der Maschine (10) in der virtuellen Umgebung, wobei während der Simulation Simulationsdaten der Partikel erfasst werden; Bestimmen (36) von Spinänderungen der Partikel basierend auf den Simulationsdaten, wobei jeder Spinänderung ein Ort des entsprechenden Partikels zum Zeitpunkt der Spinänderung zugeordnet ist; Filtern (38) der bestimmten Spinänderungen nach einem oder mehreren Filterkriterien, wobei gemäß einem ersten Filterkriterium der Filterkriterien nach den Spinänderungen gefiltert wird, die größer oder gleich als ein definierter Schwellenwert sind; Bestimmen (40) von mechanischen Gefährdungsstellen (19) basierend auf den Orten, die den gefilterten Spinänderungen zugeordnet sind; und Bestimmen (42) des mindestens einen Parameters der Sicherheitskonfiguration basierend auf den bestimmten, mechanischen Gefährdungsstellen (18). Des Weiteren betrifft die vorliegende Erfindung ein Verfahren (50) zum Einrichten eines Sicherheitssystems (12) für eine Maschine (10). Des Weiteren betrifft die vorliegende Erfindung ein Computerprogrammprodukt.

## Beschreibung

Die vorliegende Erfindung betrifft ein computerimplementiertes Verfahren zur Bestimmung mindestens eines Parameters einer Sicherheitskonfiguration eines Sicherheitssystems für eine Maschine. Des Weiteren betrifft die vorliegende Erfindung ein Verfahren zum Einrichten eines Sicherheitssystems für eine Maschine. Des Weiteren betrifft die vorliegende Erfindung ein Computerprogrammprodukt.

Bei der Konstruktion, Produktion und Betrieb von Maschinen und Anlagen ist die Sicherheit dieser Maschinen und Anlagen von wesentlicher Bedeutung. In Europa beispielsweise ist dieses Erfordernis normativ durch die Maschinenrichtlinie (CE) festgelegt, die eine regelmäßige Gefährdungsbeurteilung für die komplette Lebensdauer einer Maschine vorschreibt.

Für die CE Zertifizierung muss nach der Norm EN ISO 12100 eine Gefahrenanalyse von Maschinen durchgeführt werden. Die Norm EN ISO 12100 legt die grundsätzliche Terminologie und Methodologie fest und stellt allgemeine Leitsätze zur Risikobeurteilung und Risikominderung auf, um Konstrukteure dabei zu unterstützen, sichere Maschinen herzustellen.

Ein wichtiger Analyseaspekt ist dabei die Evaluation von mechanischen Gefährdungsstellen bzw. Gefahrenstellen, die Gefahrenpotenzial für den Menschen aufweisen. Mechanische Gefährdungsstellen sind beispielsweise Kanten oder Spitzen, insbesondere scharfe Kanten oder Spitzen.

Derartige mechanische Gefährdungsstellen einer Maschine sind zu bestimmen und abzusichern. Zur Absicherung von mechanische Gefährdungsstellen können verschiedene technische Schutznahmen ergriffen werden. Insbesondere kann ein Sicherheitssystem vorgesehen sein, mit dem bestimmte Gefährdungsstellen der Maschine abgesichert werden. Das Sicherheitssystem kann beispielsweise Sensoren, Kameras, Kantenschutze oder Absperrungen aufweisen, mittels denen die Gefährdungsstellen gesichert werden können.

Bisher wird die CE Zertifizierung händisch von einem Prüfer durchgeführt. Insbesondere wurde bisher der Prüfkörper von einem Prüfer händisch nach eigenem Ermessen auf mechanische Gefährdungsstellen analysiert.

Vor diesem Hintergrund ist es eine Aufgabe, ein Verfahren anzugeben, mit welchem die Sicherheit einer Maschine verbessert werden kann. Insbesondere ist es eine Aufgabe, ein Verfahren anzugeben, mittels dem die Erkennung und Absicherung von Gefährdungsstellen einer Maschine verbessert werden kann.

Gemäß einem ersten Aspekt der vorliegenden Erfindung wird diese Aufgabe gelöst durch ein computerimplementiertes Verfahren zur Bestimmung mindestens eines Parameters einer Sicherheitskonfiguration eines Sicherheitssystems für eine Maschine, mit den folgenden Schritten:
- Bereitstellen eines virtuellen Modells der Maschine in einer virtuellen Umgebung;
- Simulieren einer Streuung von einem oder mehreren Partikeln an dem virtuellen Modell der Maschine in der virtuellen Umgebung, wobei während der Simulation Simulationsdaten der Partikel erfasst werden;
- Bestimmen von Spinänderungen der Partikel basierend auf den Simulationsdaten, wobei jeder Spinänderung ein Ort des entsprechenden Partikels zum Zeitpunkt der Spinänderung zugeordnet ist;
- Filtern der bestimmten Spinänderungen nach einem oder mehreren Filterkriterien, wobei gemäß einem ersten Filterkriterium der Filterkriterien nach den Spinänderungen gefiltert wird, die größer oder gleich als ein definierter Schwellenwert sind;
- Bestimmen von mechanischen Gefährdungsstellen basierend auf den Orten, die den gefilterten Spinänderungen zugeordnet sind;
- Bestimmen des mindestens einen Parameters der Sicherheitskonfiguration basierend auf den bestimmten, mechanischen Gefährdungsstellen.

Gemäß einem zweiten Aspekt der vorliegenden Erfindung wird ein Verfahren zum Einrichten eines Sicherheitssystems für eine Maschine bereitgestellt, mit den folgenden Schritten:
- Bestimmen mindestens eines Parameters einer Sicherheitskonfiguration des Sicherheitssystems für die Maschine mittels des Verfahrens nach dem ersten Aspekt der Erfindung; und
- Einrichten des Sicherheitssystems auf Grundlage der Sicherheitskonfiguration.

Gemäß einem dritten Aspekt der vorliegenden Erfindung wird ein Computerprogrammprodukt mit einem Computerprogramm bereitgestellt, das Programmcodemittel zur Durchführung eines Verfahren nach dem ersten Aspekt der Erfindung aufweist, wenn das Computerprogramm auf einem Computer ausgeführt wird. Des Weiteren kann auch ein Computerprogrammprodukt bereitgestellt sein, das Befehle umfasst, die bei der Ausführung des Programms durch einen Computer diesen veranlassen, die Schritte des Verfahrens nach dem ersten Aspekt der Erfindung auszuführen.

Vorteilhafterweise wird das neue Verfahren unter Verwendung einer Verarbeitungseinheit oder einer Steuereinrichtung implementiert, die ein Mehrzweckcomputer oder ein Spezialcomputer sein kann, wobei ein angemessenes Computerprogramm oder Computerprogrammprodukt gespeichert und ausgeführt wird, wobei das Computerprogramm oder das Computerprogrammprodukt zum Bestimmen des mindestens eines Parameters der Sicherheitskonfiguration des Sicherheitssystems für die Maschine oder zum Einrichten des Sicherheitssystems für die Maschine gemäß den zuvor genannten Verfahren gestaltet und ausgebildet ist.

Die virtuelle Umgebung umfasst einen computergenerierter, dreidimensionale Raum, der auch als virtueller Raum bezeichnet werden kann. Mittels der virtuellen Umgebung können Objekte modelliert, texturiert und animiert werden. Eine virtuelle Umgebung kann beispielsweise mittels entsprechender Softwareprogramme (insbesondere einer Grafik-Engine) auf einem Computer erzeugt werden. Zur Simulation kann beispielsweise die Software Blender verwendet werden.

In der virtuellen Umgebung wird ein virtuelles Modell der Maschine bereitgestellt bzw. generiert. Das virtuelle Modell ist ein 3D-Modell der Maschine. Das virtuelle Modell kann insbesondere ein Konstruktionsmodell bzw. ein CAD (computer-aided design) Modell sein. Ein virtuelles Modell der Maschine basiert insbesondere auf 3D-Daten der Maschine, mittels denen das virtuelle Modell in der virtuellen Umgebung erzeugt und damit bereitgestellt werden kann.

In der virtuellen Umgebung kann die Bewegung von Objekten simuliert werden. Bei der Simulation gemäß des vorgeschlagenen Verfahrens wird die Bewegung von einem oder mehreren Partikeln in der virtuellen Umgebung simuliert. Die Partikel haben vorzugsweise eine Ausdehnung. Die Partikel können beispielsweise kugelförmig sein. Die Partikel haben vorzugsweise auch eine Masse. Die Masse kann beispielsweise homogen über das Volumen des Partikels oder homogen auf der Oberfläche des Partikels verteilt sein. Die Oberfläche der Partikel kann eine Oberflächenrauheit aufweisen, die auch als Klebrigkeit bezeichnet werden kann. Vorzugsweise haben in der Simulation alle Partikel die gleichen physikalischen Eigenschaften, insbesondere Masse, Größe, Form und Oberflächenrauheit. Insbesondere können identische Partikel verwendet werden.

Vorzugsweise ist das virtuelle Modell der Maschine ortsfest in der virtuellen Umgebung angeordnet. Alternativ kann das das virtuelle Modell der Maschine eine Masse haben, die sehr viel größer als die Masse der Partikel ist.

Zur Simulation werden die Partikel in der virtuellen Umgebung erzeugt. Zur Bewegung der Partikel kann die virtuelle Umgebung ein Kraftfeld, insbesondere ein Gravitationsfeld, aufweisen. Der Ursprung des Kraftfelds, insbesondere das Gravitationszentrum, kann beispielsweise im Zentrum oder Schwerpunkt des virtuellen Modells angeordnet sein. Alternativ kann das Kraftfeld auch ein abstoßendes Kraftfeld ausgehend von einer Kugelschale sein, in deren Zentrum das virtuelle Modell angeordnet ist. Alternativ oder zusätzlich können die Partikel auch bereits mit einer definierten Geschwindigkeit bzw. einem definierten Impuls in der virtuellen Umgebung erzeugt werden, wobei der Geschwindigkeitsvektor bei Erzeugung vorzugsweise in Richtung des virtuellen Modells der Maschine zeigt.

Die Partikel können an der Oberfläche des virtuellen Modells der Maschine gestreut werden. Bei der Streuung stoßen bzw. kollidieren die Partikel mit dem virtuellen Modell der Maschine und werden dadurch abgelenkt. Das Stoßen der Partikel mit dem virtuellen Modell ist dabei vorzugsweise inelastisch. Insbesondere können das virtuelle Modell und die Partikel in der virtuellen Umgebung als starre Körper simuliert werden. Der Ort, an dem die Partikel mit dem virtuellen Modell stoßen, kann als Streuungsort bezeichnet werden.

Wenn ein Partikel im Allgemeinen mit einem Objekt stößt, können sich Impuls und Drehimpuls des Partikels ändern. Insbesondere können sich bei einem Stoß die Bewegungsrichtung und der Spin der stoßenden Partikel ändern. Der Spin eines Partikels kann auch als Eigendrehimpuls oder Drall bezeichnet werden. Im Allgemeinen ist der Spin eines Körpers eine Drehbewegung bzw. Rotation um den Massenschwerpunkt des Körpers. Daher können sich bei der Streuung der Partikel an dem virtuellen Modell die Bewegungsrichtung und insbesondere der Spin der Partikel ändern.

Während der Simulation werden Simulationsdaten der Partikel erfasst. Als Simulationsdaten werden vorzugsweise zumindest ein Ort und ein Spin jedes Partikels zu einer Mehrzahl von Zeitpunkten erfasst. Vorzugsweise werden die Simulationsdaten in regelmäßigen zeitlichen Intervallen (insbesondere über die Dauer der Simulation) erfasst. Die Mehrzahl von Zeitpunkten können daher in gleichen zeitlichen Abständen aufeinander folgen. Jedes Zeitintervall entspricht dabei einem Simulationsschritt. Mit anderen Worten werden die Simulationsdaten über die Dauer der Simulation regelmäßig in bestimmten Zeitintervallen, sprich für jeden Simulationsschritt, erfasst. Die Simulationsdaten umfassen somit für jeden Zeitpunkt (insbesondere für jeden Simulationsschritt) den Ort und den Spin jedes Partikels.

Die erfassten Simulationsdaten werden dann analysiert. Insbesondere wird bestimmt, ob sich der Spin der Partikel während der Simulation verändert hat. Eine Änderung des Spins wird als Spinänderung bezeichnet. Insbesondere werden die Simulationsdaten untersucht, um Spinänderungen der Partikel zu bestimmen. Dazu wird jeweils der Spin eines Partikels zu zwei erfassten, aufeinanderfolgenden Zeitpunkten (einem ersten und einem zweiten Zeitpunkt) betrachtet. Eine Spinänderung liegt vorzugsweise dann vor, wenn die Differenz zwischen dem Spin zum ersten Zeitpunkt und dem Spin zum zweiten Zeitpunkt ungleich Null ist. Als Maß für eine Spinänderung kann insbesondere der Betrag der Differenz zwischen dem Spin zum ersten Zeitpunkt und dem Spin zum zweiten Zeitpunkt genommen werden.

Jeder Spinänderung kann ein Ort des entsprechenden Partikels zum Zeitpunkt der Spinänderung zugeordnet werden. Als Ort zum Zeitpunkt der Spinänderung kann beispielsweise der Ort zum ersten Zeitpunkt, der Ort zum zweiten Zeitpunkt, oder ein Mittelwert der beiden Orte zu den beiden Zeitpunkten zugeordnet werden.

Wie zuvor erläutert, tritt eine Änderung eines Spins eines Partikels immer als Resultat eines Stoßes des Partikels auf. Insbesondere ändert sich der Spin eines Partikels, wenn der Partikel mit dem virtuellen Modell der Maschine stößt, sprich an diesem gestreut wird. Der Ort des Partikels zum Zeitpunkt der Spinänderung liegt dann an dem Streuungsort des Partikels.

Die bestimmten Spinänderungen werden dann gefiltert. Zur Filterung werden ein oder mehrere Filterkriterien angewandt. Mit anderen Worten bedeutet Filtern, dass nach speziellen Spinänderungen gesucht wird, die die Filterkriterien erfüllen. Durch das Filtern werden diejenigen Spinnänderungen verworfen, die die angewandten Filterkriterien nicht erfüllen. Als gefilterte Spinänderungen werden somit die Spinänderungen bezeichnet, die die angewandten Filterkriterien erfüllen.

Die ein oder mehreren Filterkriterien weisen zumindest ein erstes Filterkriterium auf. Gemäß dem ersten Filterkriterium wird nach den Spinänderungen gefiltert, die größer oder gleich als ein definierter Schwellenwert sind. Mit anderen Worten wird gemäß dem ersten Filterkriterium ein Schwellenwertverfahren angewandt.

Bei Streuung der Partikel an einer mechanischen Gefährdungsstelle, wie beispielsweise einer Kante oder Spitze der Maschine, ist zumindest die Wahrscheinlichkeit erhöht, dass es zu einer großen bzw. größeren Spinnänderung kommt. Die Wahrscheinlichkeit erhöht sich weiter, je schärfer bzw. spitzer die Kante oder Spitze ist. Bei Streuung an mechanischen Gefährdungsstellen ist die Spinänderung somit in der Regel größer als bei Streuung an Oberflächen, die relativ eben oder nur leicht gekrümmt sind. Insbesondere bei Streuung an scharfen Kanten oder Spitzen ist die Spinänderung in der Regel wesentlich größer als bei Streuung an einer relativ ebenen oder leicht gekrümmten Oberfläche.

Durch Filtern nach einem Schwellenwert werden kleine Spinnänderung herausgefiltert, sprich verworfen. Dadurch können die Spinänderungen verworfen werden, die nicht durch Streuung an mechanischen Gefährdungsstellen hervorgerufen werden. Die Höhe des Schwellenwerts gibt die Sensitivität der Filterung an. Umso höher der Schwellenwert ist, umso schärfer bzw. spitzer muss eine Kante oder Spitze der Maschine sein, um eine entsprechende Spinänderung des Partikels bei einer Streuung zu bewirken. Mit anderen Worten ermöglicht das Schwellenwert basierte Filtern somit das Filtern nach Spinänderungen, die an mechanischen Gefährdungsstellen auftreten.

Basierend auf den Orten, die den gefilterten Spinänderungen zugeordnet sind, können dann mechanischen Gefährdungsstellen der Maschine bestimmt werden. Mechanische Gefährdungsstellen können vorzugsweise Kanten oder Spitzen der Oberfläche der Maschine sein, wobei die Lage dieser Kanten oder Spitzen basierend auf den Orten, die den gefilterten Spinänderungen zugeordnet sind, bestimmt wird. Insbesondere sind mechanischen Gefährdungsstellen scharfe oder spitze, sprich sicherheitsrelevante, Kanten oder Spitzen der Oberfläche der Maschine. Durch das Filtern nach dem ersten Filterkriterium werden die gefilterten Spinänderungen in der Regel durch Streuung an mechanischen Gefährdungsstellen bewirkt. Der der Spinänderung zugeordnete Ort liegt dann an der jeweiligen mechanischen Gefährdungsstelle.

Basierend auf den bestimmten, mechanischen Gefährdungsstellen kann dann mindestens ein Parameter einer Sicherheitskonfiguration eines Sicherheitssystems für die Maschine bestimmt werden.

Das Sicherheitssystem kann verschiedene Schutzeinrichtungen zur Absicherung von mechanischen Gefährdungsstellen der Maschine aufweisen. Als Schutzeinrichtungen können beispielsweise physische Schutzeinrichtungen wie Kantenschutze, Absperrungen, Markierungen und dergleichen oder sensorische wie Sensoren, Lichtgitter, Kameras, und dergleichen vorgesehen sein. Mittels einer physischer Schutzeinrichtung kann eine mechanische Gefährdungsstelle abgesichert werden, indem der Zugang zu dieser durch entsprechende Anordnung der physischen Schutzeinrichtung erschwert oder verhindert wird. Mittels einer sensorischen Schutzeinrichtung kann eine mechanische Gefährdungsstelle abgesichert werden, indem ein Bereich, sprich eine Sicherheitszone, um die mechanische Gefährdungsstelle mittels der sensorischen Schutzeinrichtung überwacht wird. Der Bereich kann beispielsweise durch einen Sicherheitsabstand zu der mechanischen Gefährdungsstelle festgelegt werden. Die sensorischen Schutzeinrichtungen können mit einer Steuereinrichtung des Sicherheitssystems verbunden sein. Wenn erkannt wird, dass ein Mensch den überwachten Bereich betritt bzw. sich in dem überwachten Bereich aufhält, können entsprechende Schutzmaßnahmen ergriffen werden. Beispielsweise kann die Schutzeinrichtung oder die Steuereinrichtung des Sicherheitssystems dazu eingerichtet sein, ein optisches oder akustisches Alarmsignal auszugeben oder die Maschine abzuschalten, wenn erkannt wird, dass ein Mensch den überwachten Bereich betritt bzw. sich in dem überwachten Bereich aufhält.

Eine Sicherheitskonfiguration des Sicherheitssystems definiert somit die Anordnung und/oder Konfiguration einer oder mehrerer Schutzeinrichtungen des Sicherheitssystems. Die Sicherheitskonfiguration wird durch einen oder mehrere Parameter definiert. Ein Parameter der Sicherheitskonfiguration bestimmt somit die Anordnung und/oder Konfiguration einer oder mehrerer Schutzeinrichtungen. Mit anderen Worten bestimmt ein Parameter der Sicherheitskonfiguration somit eine Schutzmaßnahme zur Sicherung der mechanischen Gefährdungsstelle.

Entsprechend der bestimmten Sicherheitskonfiguration des Sicherheitssystems kann dann das Sicherheitssystem entsprechend eingerichtet werden, um die bestimmten, mechanischen Gefahrenstellen der Maschine abzusichern. Dadurch wird eine Schutzmaßnahme umgesetzt, um zu verhindern oder zu erschweren, dass sich ein Mensch an den bestimmten, mechanischen Gefährdungsstellen verletzten kann.

Wenn alle bestimmten Spinänderungen kleiner als der Schwellenwert sind, werden durch das Filtern nach dem ersten Filterkriterium alle bestimmten Spinänderungen verworfen. In diesem Fall wird festgestellt, dass keine mechanischen Gefährdungsstellen vorliegen. Entsprechend sind auch keine Schutzmaßnahmen erforderlich.

Entsprechendes gilt auch, wenn in der Simulation keine Spinänderungen auftreten, also dann, wenn sich der Spin der Partikel während der Simulation nicht ändert. Auch in diesem Fall sind auch keine Schutzmaßnahmen erforderlich.

Das neue, vorgeschlagene Verfahren liefert somit eine Methode zur Bestimmung von mechanischen Gefährdungsstellen. Diese Methode kann auch Partikel-Spin-Methode genannt werden. Mittels der Partikel-Spin-Methode können mechanische Gefahrenstellen, wie beispielsweise scharfe Kanten oder Spitzen, automatisiert erkannt werden. Mittels der Partikel-Spin-Methode kann die CE Zertifizierung somit automatisiert durchgeführt werden. Zudem wird es ermöglicht, die Analyse der mechanischen Gefahrenstellen nur anhand der Konstruktionsdaten der Maschine, beispielsweise der CAD Daten, auszuführen. Gegenüber einer händischen CE Zertifizierung bietet das vorgeschlagene Verfahren den Vorteil, dass die Bestimmung schnell, zuverlässig und insbesondere zu einem frühen Zeitpunkt im Entwicklungsprozess (beispielsweise auf Basis eines CAD-Konstruktionsmodells) durchgeführt werden kann.

Des Weiteren werden in dem vorgeschlagenen Verfahren basierend auf den bestimmten Gefahrenstellen entsprechende Schutz- bzw. Sicherungsmaßnahmen bestimmt. Dazu wird in dem vorgeschlagenen Verfahren mindestens ein Parameter der Sicherheitskonfiguration des Sicherheitssystems basierend auf den bestimmten Gefahrenstellen bestimmt. Das Sicherheitssystem kann dann entsprechend der bestimmten Sicherheitskonfiguration eingerichtet werden, um die Maschine abzusichern. Auf diese Weise wird die Sicherheit der Maschine verbessert. Insbesondere wird mittels des neuen, vorgeschlagenen Verfahrens die Erkennung und Absicherung von Gefährdungsstellen einer Maschine verbessert.

Die eingangs gestellte Aufgabe wird somit vollumfänglich gelöst.

In einer ersten Ausgestaltung kann die Anzahl der Partikel größer als 1000, vorzugsweise größer als 10.000 oder 30.000, insbesondere größer als 100.000 sein.

Insbesondere kann die Anzahl der Partikel zwischen 10.000 und 30.000 liegen. Die Partikel werden vorzugsweise zu Beginn der Simulation zufällig bzw. beliebig im virtuellen Raum um das virtuelle Modell verteilt. Auf diese Weise erreicht man eine bessere Abtastung des Körpers des virtuellen Modells der Maschine bei einer relativ geringen Simulationsdauer. Eine geringere Anzahl der Partikel lässt sich mit einer längeren Simulationsdauer kompensieren, um auch mit wenigen Punkten eine hohe Abtastung zu erhalten.

In einer weiteren Ausgestaltung können die Partikel eine Partikelgröße von 1 mm bis 1000 mm, vorzugsweise 5 mm bis 600 mm, insbesondere 50 mm, aufweisen.

Die Partikelgröße definiert einen Durchmesser (insbesondere eine maximale Ausdehnung) der Partikel. Durch eine kleinere Partikelgröße erreicht man eine feinere Abtastung des Körpers des virtuellen Modells der Maschine. Aber eine zu kleine Partikelgröße kann dazu führen, dass Bereiche des Körpers des virtuellen Modells der Maschine abgetastet werden, die für einen Menschen nicht erreichbar sind. Daher wird die Partikelgröße vorzugsweise so eingestellt, dass sie Dimensionen des menschlichen Körpers, wie beispielsweise die eines Arms, einer Hand oder eines Fingers, entspricht. Die Partikelgröße kann beispielsweise 50 bis 100 cm betragen (in etwa entsprechend einer durchschnittlichen Armlänge) oder 10 cm bis 30 cm (in etwa entsprechend einer durchschnittlichen Handlänge) oder 5 cm bis 10 cm (in etwa entsprechend einer Fingerlänge) oder 1 cm bis 2 cm (in etwa entsprechend einer Fingerdicke) betragen. Auf diese Weise kann simuliert werden, ob ein Mensch einen Bereich erreichen kann, sprich ob ein Bereich für einen Menschen zugänglich ist. Durch geeignete Wahl der Partikelgröße kann somit sichergestellt werden, dass nur die mechanischen Gefahrenstellen erkannt werden, die für einen Menschen auch zugänglich sind.

In einer weiteren Ausgestaltung können eine bestimmte Anzahl der Partikel zum Simulieren der Streuung gleichzeitig an dem virtuellen Modell der Maschine gestreut werden, insbesondere wobei die Partikel während des Simulierens der Streuung untereinander kollidieren können.

Grundsätzlich können die Partikel zum Simulieren der Streuung entweder einzeln, sprich nacheinander und unabhängig voneinander, oder gleichzeitig an dem Modell gestreut werden. Bei gleichzeitiger Streuung können die Partikel während des Simulierens der Streuung untereinander kollidieren. Kollidieren bedeutet, dass die Partikel untereinander stoßen können und dadurch ihre Bewegungsrichtung ändern können. Dadurch können Bereiche des Körpers des virtuellen Modells der Maschine erreicht werden, die ohne Kollisionen der Partikel untereinander nur schwer oder gar nicht erreichbar wären. Auf diese Weise wird die Abtastung des Körpers des virtuellen Modells der Maschine weiter verbessert.

In einer weiteren Ausgestaltung können die Partikel, insbesondere die bestimmte Anzahl der Partikel, zum Simulieren der Streuung von einer Sphäre (insbesondere von der Sphäre nach innen) emittiert werden, wobei die Sphäre in der virtuellen Umgebung so angeordnet ist, dass sie das virtuelle Modell der Maschine umgibt.

Die Sphäre ist vorzugsweise eine geschlossene Oberfläche, insbesondere eine Kugeloberfläche und dient als Bereich, in dem die Partikel zur Simulation erzeugt werden. Diese Sphäre kann daher als Emission-Sphäre bezeichnet werden. Die Emissionsorte, von denen die Partikel von der Sphäre emittiert werden, könne auf der Sphäre entweder zufällig verteilt oder im Wesentlichen gleichverteilt sein. Das virtuelle Modell ist vorzugsweise im Zentrum der Emission-Sphäre angeordnet. Die Partikel können bei der Erzeugung auf der Emission-Sphäre eine Geschwindigkeit, sprich einen Anfangsimpuls, haben. Die Richtung dieser Geschwindigkeit kann nach innen (insbesondere in Normalen-Richtung zur Sphäre) gerichtet sein. Vorzugsweise werden die Partikel ohne anfänglichen Spin emittiert. Durch das Emittieren von einer derartigen Sphäre wird eine relativ gleichmäßige Abtastung des Körpers des virtuellen Modells der Maschine erreicht.

Des Weiteren kann in der virtuellen Umgebung, sprich im virtuellen Raum, auch weitere Sphäre angeordnet sein, die als Reflektion-Sphäre bezeichnet werden kann. Die Reflektion-Sphäre umgibt ebenfalls das virtuelle Modell, wobei das virtuelle Modell vorzugsweise im Zentrum angeordnet ist. Die Reflektion-Sphäre ist mindestens so groß wie bzw. gräßer als die Emission-Sphäre. Die Reflektion-Sphäre ist in der virtuellen Umgebung ortsfest. Partikel die von innen kommend an die Reflektion-Sphäre stoßen, werden wieder nach innen reflektiert. Auf diese Weise werden die Partikel während der Simulation in einem definierten Raumvolumen in der virtuellen Umgebung gehalten. Auf diese Weise wird die Häufigkeit der Stöße der Partikel mit dem Körper des virtuellen Modells der Maschine während der Simulation erhöht. Dadurch wird somit auch die Abtastung des Körpers des virtuellen Modells der Maschine verbessert.

In einer weiteren Ausgestaltung kann in dem Schritt des Filterns gemäß einem zweiten Filterkriterium der Filterkriterien nach den Spinänderungen gefiltert werden, deren zugeordnete Orte in der virtuellen Umgebung an oder in der Nähe des virtuellen Modells liegen.

Das Filtern nach dem zweiten Filterkriterium wird vorzugsweise vor dem Filtern nach dem ersten Filterkriterium durchgeführt. Alternativ kann das Filtern nach dem ersten Filterkriterium auch vor dem Filtern nach dem zweiten Filterkriterium durchgeführt werden. In einer weiteren Alternative kann auch gleichzeitig nach dem ersten und zweiten Filterkriterium gefiltert werden. "An oder in der Nähe des virtuellen Modells" definiert somit einen bestimmten Bereich um das virtuelle Modell, wobei bei Filterung nach dem zweiten Filterkriterium die Spinänderungen herausgefiltert werden, deren zugeordnete Orte nicht in dem bestimmten Bereich um das virtuelle Modell liegen. Der bestimmte Bereich kann beispielsweise durch einen bestimmten Abstand zu dem Schwerpunkt oder Zentrum des virtuellen Modells definiert werden, wobei der bestimmte Abstand mindestens so groß ist wie ein Durchmesser bzw. eine maximale Ausdehnung des virtuellen Modells. Mittels des bestimmten Abstands wird somit eine Kugel definiert, in der das virtuelle Modell angeordnet ist und die vorzugsweise in der Emission-Sphäre liegt und kleiner als diese ist. Alternativ kann der bestimmte Bereich auch über einen bestimmten Abstand zu der Oberfläche des virtuellen Modells definiert werden. Durch das Filtern nach dem zweiten Filterkriterium werden somit Spinänderungen verworfen, die nicht durch Stöße der Partikel mit dem Körper des virtuellen Modells der Maschine hervorgerufen werden. Mit anderen Worten werden dadurch Stöße der Partikel mit anderen Objekten, beispielsweise der Partikel untereinander oder mit der äußeren Reflektion-Sphäre, herausgefiltert.

In einer weiteren Ausgestaltung kann in dem Schritt des Bestimmens der Spinnänderungen eine Spinkarte auf Grundlage der bestimmten Spinänderungen und der dazu zugeordneten Orte erzeugt werden, wobei die Spinnkarte in dem Schritt des Filterns gefiltert wird, wobei in dem Schritt des Bestimmens der mechanischen Gefährdungsstellen der Maschine die mechanischen Gefährdungsstellen basierend auf der gefilterten Spinkarte bestimmt werden.

Die Spinkarte stellt die Spinänderungen an den zugeordneten Orten dar. Der Ort kann beispielsweise durch Koordinaten x, y, z eines kartesischen Koordinatensystems beschrieben werden. Die Spinkarte ist somit eine Zuordnung von den bestimmten Spinänderungen S(x, y, z) zu den entsprechenden Orten. Mit anderen Worten enthält die Spinkarte alle bestimmten Spinänderungen. Im Schritt des Filterns wird die Spinkarte gefiltert. Dazu werden diejenigen Spinänderungen aus der Spinkarte verworfen, die die angewandten Filterkriterien nicht erfüllen. Die gefilterte Spinkarte enthält somit nur noch die Spinänderungen, die die angewandten Filterkriterien erfüllen. Die gefilterte Spinkarte kann auch als ausgedünnte Spinkarte bezeichnet werden. Die gefilterte Spinkarte enthält somit nur noch die Orte, an denen große Spinänderungen, insbesondere im Bereich der Maschine, auftreten, welche mechanischen Gefährdungsstelle zuzuschreiben sind.

In einer weiteren Ausgestaltung kann der mindestens eine Parameter der Sicherheitskonfiguration eine Anordnung und/oder Konfiguration einer Schutzeinrichtung des Sicherheitssystems eine Anordnung einer Sicherheitszone um die bestimmten, mechanischen Gefährdungsstellen und/oder ein Sicherheitsabstand zu den bestimmten, mechanischen Gefährdungsstellen ist sein.

Eine Anordnung einer Schutzeinrichtung definiert vorzugsweise die Lage, Ausrichtung, Form und/oder Größe der Schutzeinrichtung. Als Schutzeinrichtungen können die zuvor bereits erläuterten physischen und sensorischen Schutzeinrichtungen verwendet werden. Eine Konfiguration einer Schutzeinrichtung definiert, wie die Schutzeinrichtung zur Sicherung der entsprechenden Gefahrenstellen einrichtet ist. Beispielsweise kann eine sensorische Schutzeinrichtung derart eingerichtet sein, dass sie einen Bereich überwacht, der über den Sicherheitsabstand oder die Sicherheitszone definiert ist. Eine Sicherheitszone bzw. Sicherheitsabstand definieren einen Bereich, den eine Person nicht betreten bzw. erreichen sollte oder darf. Dieser Bereich ist somit ein zu überwachender bzw. zu sichernder Bereich. Die Überwachung bzw. Sicherung kann mittels den entsprechenden Schutzeinrichtungen des Sicherheitssystems erfolgen. Die mittels der Parameter definierte Sicherheitskonfiguration wird dann verwendet um das Sicherheitssystem entsprechend zu konfigurieren. Mit anderen Worten wird die Sicherheitskonfiguration dazu verwendet, die Schutzeinrichtungen entsprechend der Sicherheitskonfiguration einzurichten. Die Anordnung und/oder Konfiguration einer Schutzeinrichtung sowie das Festlegen einer Sicherheitszone und/oder eines Sicherheitsabstands dienen somit zur Sicherung der bestimmten, mechanischen Gefährdungsstellen.

In einer weiteren Ausgestaltung kann beim Einrichten des Sicherheitssystems eine Schutzeinrichtung des Sicherheitssystems auf Grundlage der Sicherheitskonfiguration angeordnet und/oder konfiguriert werden.

Die Schutzeinrichtung wird dabei derart angeordnet und konfiguriert, dass sie mindestens eine entsprechende Gefährdungsstelle der Maschine absichern bzw. überwachen kann. Beispielsweise kann eine sensorische Schutzeinrichtung derart eingerichtet werden, dass sie einen zu überwachenden Bereich um die Gefährdungsstelle überwacht. Eine physische Schutzeinrichtung derart ausgebildet und angeordnet sein, dass sie die Gefährdungsstelle absichert, sprich den Zugang zur Gefährdungsstelle durch einen Menschen erschwert oder verhindert. Auf diese Weise wird die Sicherung der Maschine entsprechend umgesetzt.

In einer weiteren Ausgestaltung können beim Einrichten des Sicherheitssystems eine Sicherheitszone oder ein Sicherheitsabstand auf Grundlage der Sicherheitskonfiguration eingerichtet wird, wobei die Sicherheitszone oder der Sicherheitsabstand mittels einer Schutzeinrichtung des Sicherheitssystems überwacht oder gesichert wird.

Beispielsweise kann eine sensorische Schutzeinrichtung vorgesehen sein, die dazu eingerichtet ist, um die Sicherheitszone oder den Sicherheitsabstand zu überwachen. Des Weiteren kann auch eine physische Schutzeinrichtung vorgesehen sein, die dazu eingerichtet ist, um die Sicherheitszone oder den Sicherheitsabstand zu sichern. Insbesondere kann die Sicherheitskonfiguration auch mehrere Sicherheitszonen oder Sicherheitsabstände für mehrere Gefährdungsstellen definieren, wobei entweder eine oder mehrere sensorische Schutzeinrichtungen dazu eingerichtet (sprich entsprechend angeordnet und konfiguriert) sind, die Sicherheitszonen und/oder Sicherheitsabstände zu mechanischen Gefährdungsstellen zu überwachen. Auf diese Weise wird die Sicherung der Maschine entsprechend umgesetzt

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht einer Maschine und eines Sicherheitssystems zur Sicherung der Maschine;
- Fig. 2: zwei beispielhafte Ansichten von Anordnungen einer Schutzeinrichtung zur Absicherung bzw. Überwachung einer Gefährdungsstelle;
- Fig. 3: eine schematische Darstellung einer Ausführungsform eines Verfahrens zur Bestimmung mindestens eines Parameters einer Sicherheitskonfiguration eines Sicherheitssystems für eine Maschine;
- Fig. 4: eine schematische Darstellung einer Ausführungsform eines Verfahrens zum Einrichten eines Sicherheitssystems für eine Maschine;
- Fig. 5: eine beispielhafte Darstellung eines Stoßes eines Balls mit einer ebenen Fläche;
- Fig. 6: eine beispielhafte Darstellung eines Stoßes eines Balls mit einer gekrümmten Fläche;
- Fig. 7: eine beispielhafte Darstellung einer Simulation der Streuung von Partikeln an einem Testkörper;
- Fig. 8: eine Darstellung einer Spinkarte der Simulation aus Fig. 7;
- Fig. 9: eine beispielhafte Darstellung einer Simulation der Streuung von Partikeln an einer Maschine;
- Fig. 10: eine Darstellung einer gefilterten Spinkarte der Simulation aus Fig. 9; und
- Fig. 11: eine Darstellung einer stärker gefilterten Spinkarte der Simulation aus Fig. 9.

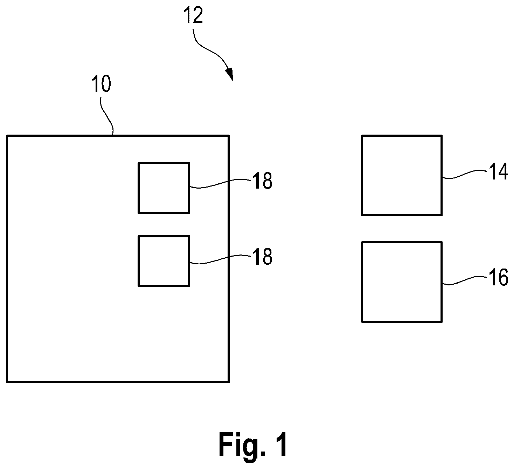

Fig. 1 zeigt eine Maschine 10 und ein Sicherheitssystem 12. Die Maschine 10 weist mechanische Gefährdungsstellen 18, wie beispielsweise Scharfe Kanten oder Spitzen, auf. Das Sicherheitssystem 12 dient zur Sicherung/Absicherung der Maschine 10, insbesondere zur Absicherung der mechanischen Gefährdungsstellen 18. Das Sicherheitssystem 12 weist eine oder mehrere Schutzeinrichtungen 14, 16 auf. Die Schutzeinrichtungen 14, 16 können physische Schutzeinrichtungen 14 (beispielsweise Absperrungen, Kantenschutze, Markierungen, usw.) und/oder sensorische Schutzeinrichtungen 16 (beispielsweise Sensoren, Kameras, usw.) sein. Mittels der Die Schutzeinrichtungen 14, 16 können die mechanischen Gefährdungsstellen 18 abgesichert werden.

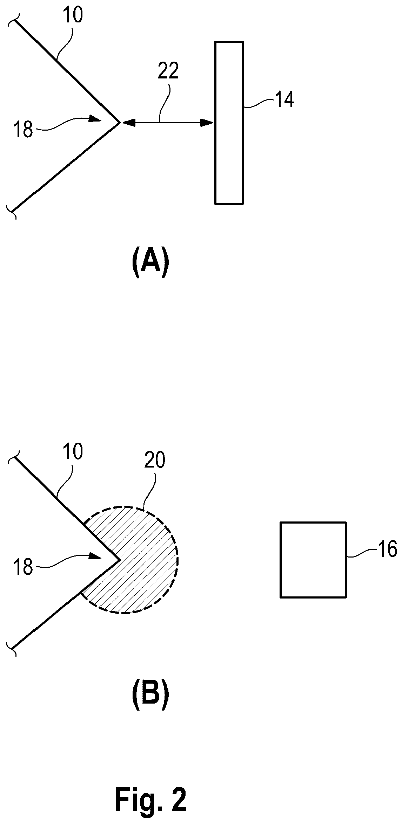

In Fig. 2 sind zwei Beispiele (A) und (B) zur Absicherung einer mechanischen Gefährdungsstelle 18 mittels einer Schutzeinrichtung 14, 16 dargestellt. Diese Beispiele der Fig. 2 dienen als Beispiele für eine Sicherheitskonfiguration des Sicherheitssystems 12. Die Sicherheitskonfiguration definiert eine Anordnung und/oder Konfiguration von Schutzeinrichtungen 14, 16 des Sicherheitssystems 12.

Im ersten Beispiel (A) ist eine physische Schutzeinrichtung 14, beispielsweise eine Absperrung, in einem bestimmten Sicherheitsabstand 22 zu einer mechanischen Gefährdungsstelle 18 der Maschine 10 angeordnet. Die physische Schutzeinrichtung 14 erschwert bzw. verhindert den Zugang zu der mechanischen Gefährdungsstelle 18.

Im zweiten Beispiel (B) ist eine sensorische Schutzeinrichtung 16, beispielsweise eine Kamera oder ein optischer Sensor, derart angeordnet, dass sie eine Sicherheitszone 20 um eine mechanische Gefährdungsstelle 18 der Maschine 10 überwacht. Die sensorische Schutzeinrichtung 16 ist dazu eingerichtet zu erkennen, wenn ein Mensch die Sicherheitszone 20 betritt und/oder sich in der Sicherheitszone 20 aufhält. Wenn die sensorische Schutzeinrichtung 16 dies erkennt, kann beispielsweise ein Alarm ausgelöst werden.

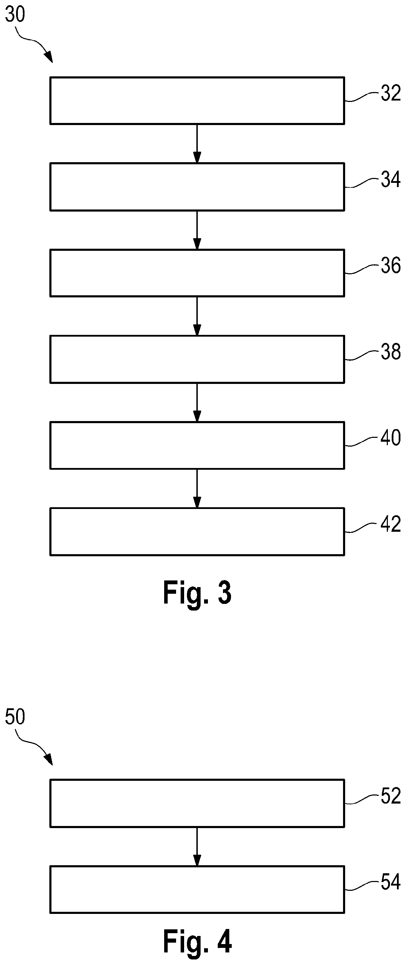

Fig. 3 zeigt eine Ausführungsform eines Verfahrens 30 zur Bestimmung mindestens eines Parameters einer Sicherheitskonfiguration des Sicherheitssystems 12 für die Maschine 10. Das Verfahren 30 kann computergestützt ausgeführt werden. Insbesondere können die Schritte des Verfahrens 30 mittels eines Computers durchgeführt werden. Das Verfahren 30 ist daher ein computerimplementiertes Verfahren.

In einem ersten Schritt 32 des Verfahrens 30 wird ein virtuelles Modell der Maschine (10) in einer virtuellen Umgebung bereitgestellt.

In einem weiteren Schritt 34 des Verfahrens 30 wird eine Streuung von einem oder mehreren Partikeln an dem virtuellen Modell der Maschine 10 in der virtuellen Umgebung simuliert, wobei während der Simulation Simulationsdaten der Partikel erfasst werden. Als Simulationsdaten können ein Ort und ein Spin jedes Partikels zu einer Mehrzahl von aufeinanderfolgenden Zeitpunkten über die Dauer der Simulation erfasst werden.

Vorzugsweise ist die Anzahl der Partikel größer als 1000, vorzugsweise größer als 10.000 oder 30.000, insbesondere größer als 100.000. Vorzugsweise weisen die Partikel eine Partikelgröße von 1 mm bis 1000 mm, vorzugsweise 5 mm bis 600 mm, insbesondere 50 mm, auf.

Zum Simulieren der Streuung kann eine bestimmte Anzahl der Partikel gleichzeitig an dem virtuellen Modell der Maschine gestreut werden, insbesondere wobei die Partikel während des Simulierens der Streuung untereinander kollidieren können.

Des Weiteren können zum Simulieren der Streuung die Partikel, insbesondere die bestimmte Anzahl der Partikel, von einer Emission-Sphäre nach innen emittiert werden, wobei die Emission-Sphäre in der virtuellen Umgebung so angeordnet ist, dass sie das virtuelle Modell der Maschine 10 umgibt. Zusätzlich kann auch eine Reflektion-Sphäre in der virtuellen Umgebung vorgesehen sein, die vorzugsweise die Emission-Sphäre umgibt. Die Reflektion-Sphäre reflektiert während der Simulation die Partikel, die von innen an die Reflektion-Sphäre stoßen, wieder nach innen.

In einem weiteren Schritt 36 des Verfahrens 30 werden Spinänderungen der Partikel basierend auf den Simulationsdaten bestimmt, wobei jeder bestimmten Spinänderung ein Ort des entsprechenden Partikels zum Zeitpunkt der Spinänderung zugeordnet ist. Insbesondere kann auf Basis der bestimmten Spinänderungen und der dazu zugeordneten Orte eine Spinkarte erzeugt werden.

In einem weiteren Schritt 38 des Verfahrens 30 werden die bestimmten Spinänderungen nach einem oder mehreren Filterkriterien gefiltert. Gemäß einem ersten Filterkriterium der Filterkriterien kann nach den Spinänderungen gefiltert werden, die größer oder gleich als ein definierter Schwellenwert sind. Gemäß einem zweiten Filterkriterium der Filterkriterien kann nach den Spinänderungen gefiltert werden, deren zugeordnete Orte in der virtuellen Umgebung an oder in der Nähe des virtuellen Modells liegen. Insbesondere kann in dem Schritt des Filterns 38 die Spinnkarte gefiltert werden.

In einem weiteren Schritt 40 des Verfahrens 30 werden mechanische Gefährdungsstellen basierend auf den Orten, die den gefilterten Spinänderungen zugeordnet sind, bestimmt. Insbesondere können mechanische Gefährdungsstellen basierend auf der gefilterten Spinkarte bestimmt werden.

In einem weiteren Schritt 42 des Verfahrens 30 wird der mindestens eine Parameter der Sicherheitskonfiguration basierend auf den bestimmten, mechanischen Gefährdungsstellen bestimmt. Insbesondere können auch mehrere der Sicherheitskonfiguration basierend auf den bestimmten, mechanischen Gefährdungsstellen bestimmt werden. Der mindestens eine Parameter der Sicherheitskonfiguration definiert eine Anordnung und/oder Konfiguration einer Schutzeinrichtung 14, 16 des Sicherheitssystems 12 und/oder eine Anordnung einer Sicherheitszone 20 um die bestimmten, mechanischen Gefährdungsstellen und/oder ein Sicherheitsabstand 22 zu den bestimmten, mechanischen Gefährdungsstellen.

Fig. 4 zeigt eine Ausführungsform des neuen Verfahrens 50 zur zum Einrichten des Sicherheitssystems 12 für die Maschine 10.

In einem ersten Schritt 52 des Verfahrens 50 wird mindestens ein Parameter einer Sicherheitskonfiguration des Sicherheitssystems 12 für die Maschine 10 bestimmt. Die Bestimmung des mindestens eines Parameters der Sicherheitskonfiguration des Sicherheitssystems 12 für die Maschine 10 kann mittels des Verfahrens 30 aus Fig. 3 erfolgen.

In einem weiteren Schritt 54 des Verfahrens 50 wird das Sicherheitssystems 12 auf Grundlage der Sicherheitskonfiguration eingerichtet, die mittels des mindestens einen, bestimmten Parameters definiert ist. Beim Einrichten des Sicherheitssystems 12 kann eine Schutzeinrichtung 14, 16 des Sicherheitssystems 12 auf Grundlage der Sicherheitskonfiguration angeordnet und/oder konfiguriert werden. Des Weiteren kann beim Einrichten des Sicherheitssystems 12 eine Sicherheitszone 20 oder ein Sicherheitsabstand 22 auf Grundlage der Sicherheitskonfiguration eingerichtet werden, wobei die Sicherheitszone 20 oder der Sicherheitsabstand 22 mittels einer Schutzeinrichtung 14, 16 des Sicherheitssystems 12 überwacht oder gesichert wird.

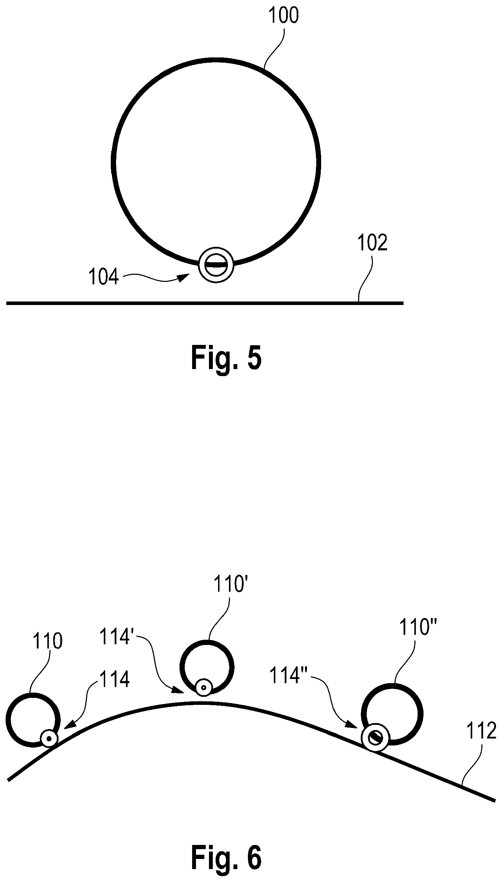

In den Figuren 5 bis 8 wird die Funktionsweise der Partikel-Spin-Methode, auf der das neue Verfahren beruht, beschrieben.

Zunächst werden in den Figuren 5 und 6 zwei Gedankenexperimente betrachtet. Man befindet sich in einer idealisierten Umgebung (Gravitation vorhanden) es wird jedoch keine Dämpfung betrachtet (konkret: keine Reibung, kein Luftwiderstand).

Als erstes wird in Fig. 5 ein Stoß eines Balls 100 (einer Kugel) mit einer ebenen Fläche 102 (einem ebenen Boden) betrachtet. Man befindet sich in einem Raum, mit einem ebenen Boden. Nun lässt man einen Ball gerade fallen ohne Drall. Der Ball wird nun dahin zurückkommen, wo man ihn hat fallenlassen. Der Ball kommt dabei mit der in Flugrichtung vordersten Stelle zuerst auf. Die Stelle kann als Stoßpunkt bezeichnet werden und ist in Fig. 5 mit dem Bezugszeichen 104 gekennzeichnet. Bei diesem Stoß bekommt der Ball keinen Drall (Spin) nach der Kollision.

Als zweites wird Fig. 6 ein Stoß eines Balls 110 (einer Kugel) mit einer gekrümmten Fläche 112 (einem welligem Boden) betrachtet. Insbesondere wird in Fig. 5 dasselbe Experiment wie in Fig. 5 wiederholt, aber nun mit einem welligen Boden anstelle eines ebenen Bodens. Nun tritt der Fall ein, dass der Ball 110 nicht mehr mit der in Flugrichtung vordersten Stelle auftrifft, sondern mit einer beliebigen anderen Stelle 114, die sich auf der Unterhälfte des Balles 110, 110`, 110" befindet. Dies ist besseren Veranschaulichung in Fig. 6 mit mehreren Bällen 110, 110`, 110" dargestellt, die beim Stoß an unterschiedlichen Stoßpunkten 114, 114`, 114" mit der gekrümmten Ebene 112 in Kontakt kommen.

Bei der Partikel-Spin-Methode macht man sich nun diese Charakteristik zu Nutze, insbesondere bei Kanten ist es statistisch wahrscheinlicher, dass ein Partikel nicht gerade aufkommt und somit einen Spin bekommt. Insbesondere ist die resultierende Spinänderung umso größer, je schärfer die Kante bzw. Spitze des Körpers ist, an der der Partikel stößt.

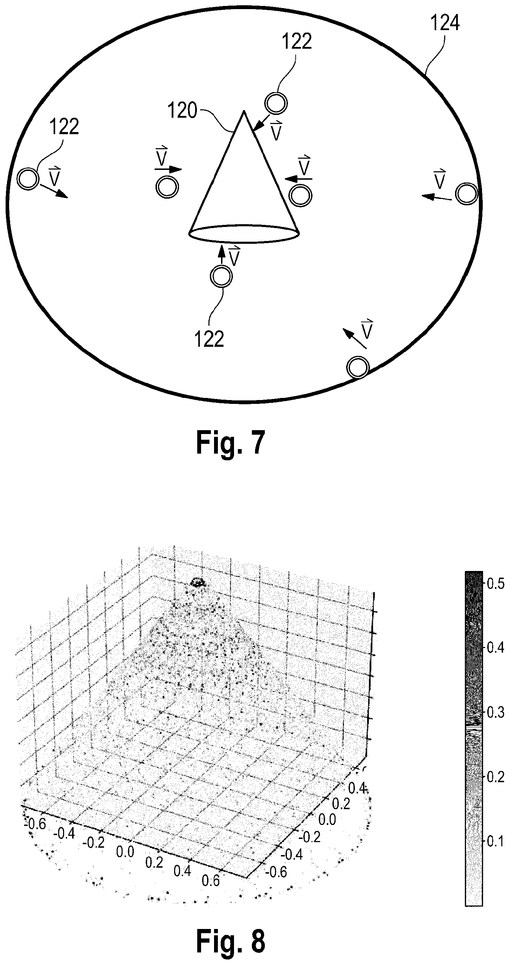

In Fig. 7 ist die Partikel-Spin-Methode einem Beispiel eines Testkörpers 120 demonstriert, der eine konische Form aufweist. Der Testkörper 120 ist insbesondere ein Kegel. In der Partikel-Spin-Methode werden Partikel 122 an dem Testkörper 120 gestreut, und Spinänderungen der Partikel bei der Streuung analysiert.

Dazu wird zunächst eine virtuelle Umgebung, sprich eine Simulationsumgebung, bereitgestellt. Die virtuelle Umgebung kann insbesondere mittels einer Grafik-Engine erzeugt werden. Beispielsweise kann hierzu das Computerprogramm Blender verwendet werden, um die virtuelle Umgebung sowie Objekte in dieser virtuellen Umgebung zu erzeugen und deren Bewegung zu simulieren. Die virtuelle Umgebung stellt einen dreidimensionalen virtuellen Raum bereit, der beispielsweise mit Hilfe von kartesischen Koordinaten beschrieben werden kann.

In der virtuellen Umgebung wird zunächst ein Modell des Testkörpers 120 erzeugt bzw. bereitgestellt. Der Schwerpunkt bzw. das Zentrum des Testkörpers 120 ist vorzugsweise in dem Ursprung der virtuellen Umgebung angeordnet. In der virtuellen Umgebung wird dann um den Testkörper (insbesondere um den Ursprung der virtuellen Umgebung) eine Emission-Sphäre 124 angeordnet. Zusätzlich kann um den Testkörper eine Reflektion-Sphäre angeordnet werden, die mindestens so groß wie die Emission-Sphäre 124 ist und die Emission-Sphäre 124 umgibt oder mit dieser zusammenfällt.

Im Zentrum oder Schwerpunkt des Testkörpers 120 bzw. im Ursprung der virtuellen Umgebung kann ein anziehendes Kraftfeld (Gravitationsfeld) erzeugt bzw. simuliert werden. Alternativ kann auch ein äußeres, abstoßendes Kraftfeld erzeugt werden, dass entweder auf der Emission-Sphäre oder auf der Reflektion-Sphäre angeordnet ist oder beide Sphären umgibt. Mittels des Kraftfelds werden die Partikel 122 in Richtung des Testkörpers 120 beschleunigt.

Zum Start der Simulation werden die Partikel 122 auf der Emission-Sphäre 124 erzeugt. Die Erzeugungsorte sind auf der gesamten Emission-Sphäre 124 zufällig verteilt bzw. gleichverteilt. Die Partikelanzahl kann beispielsweise 10.000 bis 30.000 betragen. Die Partikelgröße kann beispielsweise 5cm betragen. Die geeignete Partikelanzahl kann je nach Komplexität des Testkörpers stark variieren. Die Partikel sind vorzugsweise rund und haben eine Masse. Des Weiteren haben die Partikel eine Oberflächenrauheit, die auch Klebrigkeit genannt werden kann.

Zur Simulation der Streuung wird die Bewegung der Partikel nach Ihrer Erzeugung, beispielsweise in diskreten Simulationsschritten, simuliert. Jeder Simulationsschritt entspricht einem Zeitintervall. Die Simulationsschritte können auch als Zeitschritte bezeichnet werden. Jedem Simulationsschritt kann somit ein Zeitpunkt während der Simulation zugeordnet werden. Die Simulation umfasst vorzugsweise mindestens 1.000 Simulationsschritte. Für jeden Simulationsschritt (sprich für jeden Zeitpunkt) werden zumindest der Ort (bspw. drei Variablen) und der Spin (bspw. drei oder vier Variablen) jedes Partikels als Simulationsdaten erfasst. Insbesondere werden die Simulationsdaten über die gesamte Dauer der Simulation erfasst (sprich für alle Simulationsschritte). Die erfassten Simulationsdaten werden vorzugsweise während der Simulation gespeichert. Die gespeicherten Simulationsdaten stehen dann zur weiteren Analyse (insbesondere zur Bestimmung der Spinänderungen und der mechanischen Gefährdungsstellen) zur Verfügung.

Vorzugsweise werden die Partikel bei Ihrer Erzeugung von der Oberfläche der Emission-Sphäre nach innen, insbesondere in Normalen-Richtung zur Oberfläche, mit einer bestimmten Geschwindigkeit emittiert. Während der Simulation können die Partikel 122 sowohl untereinander als auch mit dem virtuellen Modell des Testkörpers 120 als auch mit der Reflektion-Sphäre 124 stoßen bzw. kollidieren. Dabei kollidieren die Partikel nicht mit Ihrem Schwerpunk/Zentrum, sondern mit ihrer äußeren Schale/Oberfläche. Auf diese Weise wird während der Simulation die Oberfläche des Testkörpers 120 mit den Partikeln abgetastet. Bei der Streuung an dem Testkörper können die Partikel ihren Spin ändern.

Auf Basis der während der Simulation erfassten Simulationsdaten kann dann bestimmt werden, ob und wann sich der Spin eines Partikels während der Simulation verändert hat und wenn ja, wie groß die Spinänderung ist. Auf diese Weise werden alle Spinänderungen der Partikel bestimmt, die während der Simulation aufgetreten sind. Auf Basis der bestimmten Spinänderungen kann dann eine Spinkarte erzeugt werden.

Als nächstes werden die Spinänderungen bzw. die Spinkarte gefiltert. Zum einen kann nach Spinänderungen gefiltert werden, die in einem bestimmt, begrenzten Bereich um den Testkörper (sprich an oder in der Nähre des Testkörpers) aufgetreten sind. Spinänderungen, sind nicht durch einen Stoß mit dem Testkörper hervorgerufen und werden dadurch herausgefiltert. Des Weiteren kann nach Spinänderungen gefiltert werden, die bzw. deren Beträge, einen bestimmten Schwellenwert übersteigen. Auf diese Weise können kleine Spinänderungen herausgefiltert werden, die nicht durch Stöße mit Kanten oder Spitzen hervorgerufen werden.

In Fig. 8 ist eine Spinkarte mit Spinänderungen auf der Oberfläche des Testkörpers (Kegels) aus der Simulation aus Fig. 7 dargestellt. Die Spinkarte kann auch als "Spin-Heatmap" bezeichnet werden. In der Spinkarte der Fig. 8 ist insbesondere zu sehen, dass die Spitze sowie der untere Rand des Kegels höhere Spinänderungen aufweisen als der Rest des Kegels. Die Stelle einer hohen Spinänderung entspricht somit (zumindest mit hoher Wahrscheinlichkeit) der Lage einer Spitze oder Kante, sprich einer mechanischen Gefahrenstelle, des Testkörpers. Erhöht man den Schwellenwert zum Filtern entsprechend, verbleiben nur noch Spinänderungen an der Spitze und am unteren Rand des Kegels.

Wie zuvor beschrieben, wird mit der Spinkarte die Spin-Änderung der Partikel zwischen zwei Zeitpunkten untersucht. Die Partikel haben alle zufällige Flugrichtungen und kollidieren auch untereinander. Die Vorstellung eines reibungsfreien Bällebades, wo jeder Ball eine Geschwindigkeit hat ist dabei sehr zutreffend. Bei der Methode ist dabei die Partikelgröße auch frei einstellbar, man kann also auch vorgeben, ob ein Partikel groß genug ist, um eine bestimmte Stelle zu erreichen. Mit anderen Worten kann die Partikelgröße an Dimensionen von Körperteilen des menschlichen Körpers angepasst werden (bspw. Arm, Hand, Finger). Somit macht man indirekt auch eine Erreichbarkeitsanalyse, in dem man sich anschaut, an welchen Stellen Spin-Änderungen auftreten und an welchen nicht.

Auf Basis der gefilterten Spinkarte kann somit die Lage von mechanischen Gefahrenstellen wie Kanten und Spitzen bestimmt werden. Insbesondere entsprechen die Orte der gefilterten Spinänderungen der Lage von mechanischen Gefahrenstellen der Maschine.

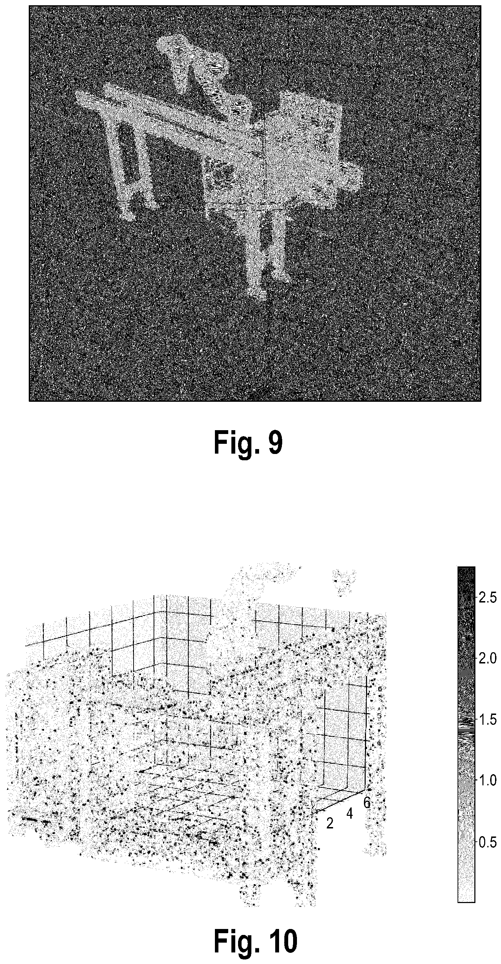

In den Figuren 9 bis 11 ist nun die Simulation der Streuung von Partikeln an einer Maschine exemplarisch gezeigt. In Fig. 9 ist ein Modell der Maschine in einer virtuellen Umgebung angeordnet. Die Maschine weist in diesem Beispiel ein Förderband und einen Roboterarm neben einem Förderband auf.

In Fig. 10 ist eine Spinkarte der Simulation aus Fig. 9 dargestellt. Die Spinänderungen wurden mittels eines Schwellenwertverfahrens gefiltert, wobei ein kleiner Schwellenwert verwendet wurde. Die Spinkarte der Fig. 10 weist Spinänderungen an Orten der meisten Kanten und Spitzen der Maschine auf.

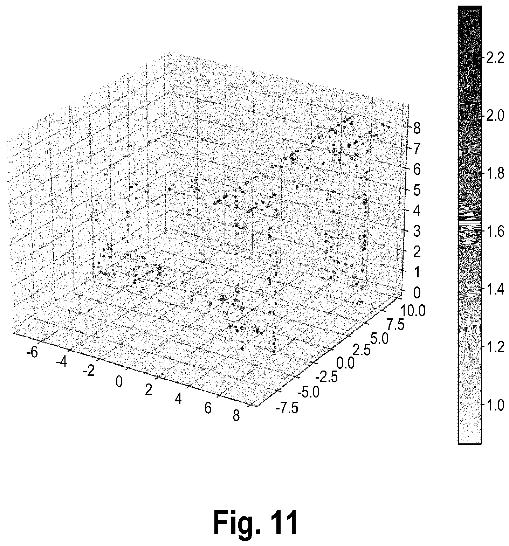

In Fig. 11 ist eine Spinkarte der Simulation aus Fig. 9 dargestellt, wobei die Spinänderungen zuvor mittels eines größeren Schwellenwerts gefiltert wurden als in Fig. 10. Auf diese Weise sind in der Spinkarte nur Spinänderungen an Orten der dargestellt, die an schärferen Kanten bzw. Spitzen der Maschine liegen.

Auf Basis der gefilterten Spinkarte kann die Lage von mechanischen Gefahrenstellen bestimmt werden. Mittels des verwendeten Schwellenwerts zur Filterung kann die Sensitivität eingestellt werden. Umso höher der Schwellenwert, umso schärfer muss eine Kante sein, um erkannt zu werden.

## Patentansprüche

1. Computerimplementiertes Verfahren (30) zur Bestimmung mindestens eines Parameters einer Sicherheitskonfiguration eines Sicherheitssystems (12) für eine Maschine (10), mit den folgenden Schritten:
- Bereitstellen (32) eines virtuellen Modells der Maschine (10) in einer virtuellen Umgebung;
- Simulieren (34) einer Streuung von einem oder mehreren Partikeln an dem virtuellen Modell der Maschine (10) in der virtuellen Umgebung, wobei während der Simulation Simulationsdaten der Partikel erfasst werden;
- Bestimmen (36) von Spinänderungen der Partikel basierend auf den Simulationsdaten, wobei jeder Spinänderung ein Ort des entsprechenden Partikels zum Zeitpunkt der Spinänderung zugeordnet ist;
- Filtern (38) der bestimmten Spinänderungen nach einem oder mehreren Filterkriterien, wobei gemäß einem ersten Filterkriterium der Filterkriterien nach den Spinänderungen gefiltert wird, die größer oder gleich als ein definierter Schwellenwert sind;
- Bestimmen (40) von mechanischen Gefährdungsstellen (18) basierend auf den Orten, die den gefilterten Spinänderungen zugeordnet sind;
- Bestimmen (42) des mindestens einen Parameters der Sicherheitskonfiguration basierend auf den bestimmten, mechanischen Gefährdungsstellen (18).

2. Verfahren nach Anspruch 1, wobei die Anzahl der Partikel größer als 1000, vorzugsweise größer als 10.000 oder 30.000, insbesondere größer als 100.000 ist.

3. Verfahren nach Anspruch 1 oder 2, wobei die Partikel eine Partikelgröße von 1 mm bis 1000 mm, vorzugsweise 5 mm bis 600 mm, insbesondere 50 mm, aufweisen.

4. Verfahren nach einem der Ansprüche 1 bis 3, wobei zum Simulieren der Streuung eine bestimmte Anzahl der Partikel gleichzeitig an dem virtuellen Modell der Maschine gestreut wird, insbesondere wobei die Partikel während des Simulierens der Streuung untereinander kollidieren können.

5. Verfahren nach einem der Ansprüche 1 bis 4, wobei zum Simulieren der Streuung die Partikel, insbesondere die bestimmte Anzahl der Partikel, von einer Sphäre nach innen emittiert werden, wobei die Sphäre in der virtuellen Umgebung so angeordnet ist, dass sie das virtuelle Modell der Maschine umgibt.

6. Verfahren nach einem der Ansprüche 1 bis 5, wobei in dem Schritt des Filterns gemäß einem zweiten Filterkriterium der Filterkriterien nach den Spinänderungen gefiltert wird, deren zugeordnete Orte in der virtuellen Umgebung an oder in der Nähe des virtuellen Modells liegen.

7. Verfahren nach einem der Ansprüche 1 bis 6, wobei in dem Schritt des Bestimmens (36) der Spinnänderungen eine Spinkarte auf Grundlage der bestimmten Spinänderungen und der dazu zugeordneten Orte erzeugt wird, wobei die Spinnkarte in dem Schritt des Filterns (38) gefiltert wird, wobei in dem Schritt des Bestimmens (40) der mechanischen Gefährdungsstellen (18) der Maschine (10) die mechanischen Gefährdungsstellen (18) basierend auf der gefilterten Spinkarte bestimmt werden.

8. Verfahren nach einem der Ansprüche 1 bis 7, wobei der mindestens eine Parameter der Sicherheitskonfiguration eine Anordnung und/oder Konfiguration einer Schutzeinrichtung (14, 16) des Sicherheitssystems (12) und/oder eine Anordnung einer Sicherheitszone (20) um die bestimmten, mechanischen Gefährdungsstellen (18) und/oder ein Sicherheitsabstand (22) zu den bestimmten, mechanischen Gefährdungsstellen 18) ist.

9. Verfahren (50) zum Einrichten eines Sicherheitssystems (12) für eine Maschine (10), mit den folgenden Schritten:
- Bestimmen (52) mindestens eines Parameters einer Sicherheitskonfiguration des Sicherheitssystems (12) für die Maschine (10) mittels des Verfahrens nach einem der Ansprüche 1 bis 8; und
- Einrichten (54) des Sicherheitssystems (12) auf Grundlage der Sicherheitskonfiguration.

10. Verfahren nach Anspruch 9, wobei beim Einrichten des Sicherheitssystems (12) eine Schutzeinrichtung (14, 16) des Sicherheitssystems (12) auf Grundlage der Sicherheitskonfiguration angeordnet und/oder konfiguriert wird.

11. Verfahren nach Anspruch 9 oder 10, wobei beim Einrichten des Sicherheitssystems (12) eine Sicherheitszone (20) oder ein Sicherheitsabstand (22) auf Grundlage der Sicherheitskonfiguration eingerichtet wird, wobei die Sicherheitszone (20) oder der Sicherheitsabstand (22) mittels einer Schutzeinrichtung (14, 16) des Sicherheitssystems (12) überwacht oder gesichert wird.

12. Computerprogrammprodukt mit einem Computerprogramm, das Programmcodemittel zur Durchführung eines Verfahren nach einem der Ansprüche 1 bis 8 aufweist, wenn das Computerprogramm auf einem Computer ausgeführt wird.
